# EUROPEAN PATENT SPECIFICATION

(11) **EP 2 797 293 B1**
(45) Date of publication and mention of the grant of the patent: **06.04.2022**
(21) Application number: 14165843.5
(22) Date of filing: 24.04.2014
(51) Int. Cl.: H04L 29/08, G06F 3/0482, G06F 3/0488

(54) **Terminal device and content displaying method thereof, server and controlling method thereof**
Endgerätevorrichtung und Inhaltsanzeigeverfahren dafür, Server und Steuerungsverfahren dafür
Dispositif de terminal et son procédé d'affichage de contenu, serveur et procédé de commande de celui-ci

(30) Priority: 24.04.2013 KR 20130045657; 04.11.2013 KR 20130132855
(43) Date of publication of application: 29.10.2014
(73) Proprietor: Samsung Electronics Co., Ltd., Gyeonggi-do 16677 (KR)
(72) Inventor: Seo, Ju-hee, Gyeonggi-do (KR); Kwak, Han-tak, Gyeonggi-do (KR); Nam, Hyun-woo, Gyeonggi-do (KR); Park, Sung-bum, Gyeonggi-do (KR); Shim, Woo-sung, Gyeonggi-do (KR); Lee, Seo-young, Gyeonggi-do (KR); Kim, Se-hoon, Gyeonggi-do (KR)
(74) Representative: Taor, Simon Edward William

(56) References cited:
- US-A1- 2009 063 372
- US-A1- 2009 124 241
- US-A1- 2009 235 312
- US-A1- 2010 222 035
- US-A1- 2011 038 470
- US-A1- 2011 288 913
- US-A1- 2012 209 839
- US-A1- 2012 209 907
- US-A1- 2013 019 173

## Description

Aspects of one or more exemplary embodiments relate to a terminal apparatus, a method for displaying content, a server, and a method for controlling the server, more particularly to a terminal apparatus providing content based on user information, a method for displaying content, a server, and a method for controlling the server.

Recent advancement in the communication technology and technology of an electronic apparatus has enabled development of various terminal apparatuses and provision of network services. A user uploads and downloads content by using a fixed terminal apparatus such as a PC or a portable terminal apparatus such as a smartphone. Or, a user views content of another person via a terminal apparatus.

For example, in order for a user to upload and download content to a SNS (Social Network Service) site via a portable terminal apparatus, the user needs to access an exclusive application. In addition, a great many users upload content, and thus there exists a large amount of content. Accordingly, a user, to access a plurality of SNS sites, needs to use a plurality of exclusive applications. Moreover, a user can miss content the user is interested in, or content related to the user, due to the large amount of content. US2012/0209839 A1 relates to providing users with contextually relevant content. US2009/0124241 A1 relates to receiving targeted messages based on a user profile. US2009/0235312 A1 relates to receiving advertisements based on keywords in a live stream. US2011/0288913 A1 and US2013/0019173 A1 relate to interacting with displayed content. A1 US20110038470 discloses methods and systems for personalized content delivery to telecommunications devices. A1 US20120209907 discloses a content aggregation and distribution service. A1 US20100222035 discloses a communication system.

Therefore, there has been a necessity to develop technologies that may enable a user to easily access a site relevant to a user or content relevant to a user.

According to an aspect of the present invention, there is provided a terminal apparatus according to claim 1. According to another aspect of the present invention, there is provided a method for displaying a content of a terminal apparatus according to claim 8. Optional features are set out in the dependent claims.

An aspect of one or more exemplary embodiments is designed in accordance with the above-described necessity and is purposed to provide a terminal apparatus which displays a content based on user information and a method for displaying a content of a terminal apparatus.

The above and/or other aspects of one or more exemplary embodiments will be described with reference to the accompanying drawings, in which:
FIG. 1 is a view illustrating a curated content providing system according to an exemplary embodiment,
FIG. 2 is a block diagram illustrating a terminal apparatus according to an exemplary embodiment,
FIG. 3 is a block diagram illustrating of a server according to an exemplary embodiment,
FIGS. 4-6 are views illustrating a method for extracting a curated content according to various exemplary embodiments,
FIGS. 7-8 are views illustrating a curated content related to a phone call receiving event according to various exemplary embodiments,
FIGS. 9-10 are views illustrating a method for displaying a curated content according to various exemplary embodiments,
FIG. 11 is a view illustrating reconstitution of an image according to an exemplary embodiment, which is not covered by the scope of the independent claims.
FIG. 12 is a block diagram illustrating the configuration of a terminal apparatus according to an exemplary embodiment,
FIG. 13 is a view illustrating a screen where a content provided with an interaction effect is displayed according to an exemplary embodiment, which is not covered by the scope of the independent claims.
FIG. 14 is a view illustrating a screen where a content added with an interaction effect is displayed according to another exemplary embodiment, which is not covered by the scope of the independent claims.
FIG. 15 is a view illustrating an indicator which displays an object added with an interaction effect according to an exemplary embodiment,
FIG. 16 is a block diagram illustrating the configuration of a terminal apparatus according to an exemplary embodiment,
FIG. 17 is a view illustrating a screen which displays a content added with another interaction effect according to an exemplary embodiment,
FIG. 18 is a flow chart illustrating a method for displaying a content of a terminal apparatus according to an exemplary embodiment,
FIG. 19 is a flow chart illustrating a method for controlling a server according to an exemplary embodiment,
FIG. 20 is a flow chart illustrating a method for controlling a terminal apparatus according to an exemplary embodiment,
FIG. 21 is a flow chart illustrating a method for controlling a terminal apparatus according to an exemplary embodiment.

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

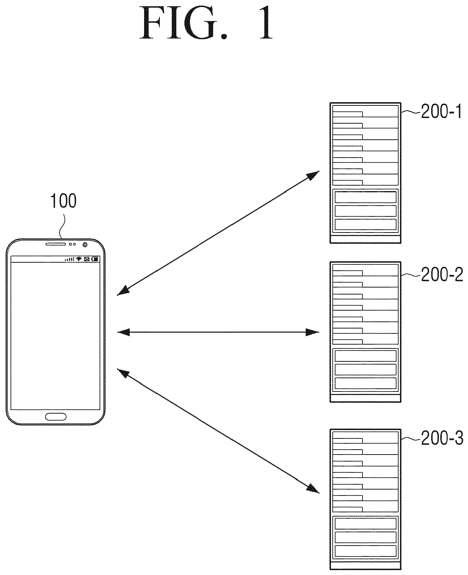

FIG. 1 is a view illustrating a curated content providing system according to an exemplary embodiment.

Referring to FIG. 1, a system for providing a curated content includes a terminal apparatus 100 and a plurality of servers 200-1, 200-2, and 200-3.

As a non-limiting example, the terminal apparatus 100 may be a mobile phone including a communication function, a smartphone, a tablet, a PDA, a TV, or the like. The terminal apparatus 100 may include a wireless LAN module (not illustrated) and perform communication with the plurality of servers 200-1, 200-2, and 200-3. The wireless LAN module (not illustrated) may be connected to Internet, in accordance with control of a controller, at a place where a wireless AP (Access Point) (not illustrated) is installed. The wireless LAN module supports wireless LAN specification of IEEE (IEEE802.11x).

As to a server 200, there are a plurality of servers exist. The plurality of servers 200-1, 200-2, and 200-3 may transmit various contents to the terminal apparatus 100. A plurality of servers 200-1, 200-2, and 200-3 may be an information providing server and an SNS (Social Network Service) server. The information providing server may transmit an information content such as news and weather to the terminal apparatus 100. The SNS server may provide an appropriate content by storing a content uploaded by the terminal apparatus 100 and determining information of a user accessing the server.

As an exemplary embodiment, user information means authentication information such as log-in to access a service, and based on such information, information related to a user provided by the service may be obtained. As to the user information, not only information uploaded by a user but also information of another account which is in connection with a user may be used. Herein, the user information indicates information including procedure such as log-in, which may be requested for only once at the time of initial connection.

The terminal apparatus 100 extracts a curated content from a content related to user information received from the server 200. The term "curated content" refers to content potentially of interest to the user. For example, the curated content can refer to a specific content related to user information in which a user is highly interested. A level of interest of a user may be determined by a certain standard. For example, the certain standard may be set as user-preference of other users on the content, content uploading date, whether or not an image of the user of the terminal apparatus 100 is included in the content related to the user information, a category selected by a user of the terminal apparatus 100, relevancy with a content recently uploaded by a user of the terminal apparatus 100, or the like. As non-limiting examples, user-preference of other users may be determined by the number of clicks of the content, the number of views, the number of downloads, the number of recommendations, or the like. That is, user-preference on a content indicates preference of other users, and this preference includes responses in the SNS to the content. In addition, content uploading date includes the date in which a content was registered in the SNS. A certain standard to extract a curated content may be set as a plurality of standards, and in this case, the standard may be determined based on assigned priority.

For example, if the number of recommendations of other users and the uploading date are the standards, priority can be set based on the number of recommendations of other users. In this case, contents are listed in an order of greater recommendations by other users, but for the content having the same number of recommendations, they may be listed in an order of uploading date, and a curated content may be determined. As another example, the terminal apparatus 100 may assign the number of recommendations of other users and uploading date with a certain value, and add up the assigned values of each content. Then, the contents may be listed in an order of greater assigned values, and a curated content may be determined

As to a subject of extracting a curated content, not only a content uploaded to an account of a user, but also a content uploaded to an account of another user who has a connection with the user may be included.

A method of extracting a curated content from the terminal apparatus 100 is an exemplary embodiment. In some cases, based on user information transmitted from the server 200 to the terminal apparatus 100, a curated content may be extracted, and the extracted content may be transmitted to the terminal apparatus 100.

The terminal apparatus 100 may be connected to the plurality of servers 200-1, 200-2, and 200-3. In order to connect the terminal apparatus 100 to a server executing a certain function, an IP (Internet Protocol) address of a server should be input, or an exclusive program (for example, an application) should be executed. The terminal apparatus 100 may count the number of connections to a server, connection duration, or the like. The terminal apparatus 100, by using at least one of the number of connections to the server and connection duration, may determine a server which is frequently connected to. For example, it may be assumed that the terminal apparatus 100 access SNS server 200-1 20 times, SNS server 200-2 12 times, and SNS server 200-3 7 times. The terminal apparatus 100 may set a server connected to over 5 times as a frequently-connected server. In this case, SNS server 200-1, SNS server 200-2, and SNS server 200-3 are set to be frequently-connected servers. The terminal apparatus 100 may set SNS server 200-1, SNS server 200-2, and SNS server 200-3 as target servers to receive curated content from.

Or, the terminal apparatus 100 may set a server connected to over 10 times as a frequently-connected server. In this case, SNS server 200-1 and SNS server 200-2 may be set as frequently-connected servers, and the terminal apparatus 100 may set only SNS server 200-1 and SNS server 200-2 as target servers to receive curated content from.

The terminal apparatus 100 may receive a curated content from the server 200, or display a curated content by extracting a curated content within the terminal apparatus 100.

Hereinbelow, the configuration of the terminal apparatus 100 which displays a curated content and the server 200 which transmits a curated content will be explained.

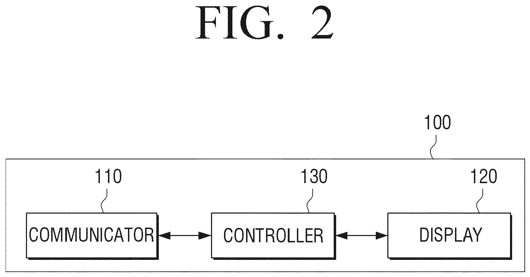

FIG. 2 is a block diagram of a terminal apparatus according to an exemplary embodiment. According to FIG. 2, the terminal apparatus 100 includes a communicator 110, the display 120, and the controller 130.

The communicator 110, by performing communication with the server 200, transmits user information to the server 200, and receives a curated content from the server 200. The communicator 110, in response to a preset event (e.g. an event of a preset or predefined type), transmits user information by the control of the controller 130. The preset event may be at least one of a phone call receiving event which occurs at a phone application, an anniversary alarm event in accordance with a preset anniversary, and a nearing event according to a preset time. That is, the preset event does not indicate an event which generally occurs from an exclusive application that accesses the corresponding server 200, but an event which occurs at another application that is separate from the exclusive application. In some embodiments, the preset event relates to an application that is unassociated with the server.

User information may be user information of the terminal apparatus 100, information on a caller on the condition that a phone call receiving event, user information related to anniversary in case of an anniversary alarm event (for example, bride or bridegroom in case of a wedding anniversary, a person having a birthday in case of a birthday).

The display 120 displays a curated content. The curated content may be displayed by using a template suitable for an application where an event occurs. Herein, the display 130 may be implemented, as non-limiting examples, as at least one of a Liquid Crystal Display, Thin Film Transistor-liquid Crystal Display, Organic Light-emitting Diode, Flexible Display, and 3D Display.

The controller 130, in response to a preset event, controls the communicator 110 to transmit user information related to the preset event to the server 200 and receive a curated content. The terminal apparatus 100 receives a curated content from the server 200, but may receive more than the curated content. For example, when extracting the curated content from the terminal apparatus 100, the terminal apparatus 100 may receive content related to user information from the server 200. Curated content to be extracted may be included in the content related to user information.

As illustrated in FIG. 1, the controller 130 may determine an address of a server to be connected, and count a number of server connections and server connection duration. The controller 130 determines a server which is frequently connected to, by using at least one of the number of server connections and connection duration. The controller 130 may transmit user information to a server which is frequently connected.

The controller 130 displays a curated content. The controller 130 may reconstitute and display an image included in a curated content. Reconstitution of an image may include at least one image processing from among image retargeting, crop, image enhancement, and saturation compensation. For image processing, perception technology such as individual perception of a material, a person, animal; perception of correlation, face, facial expression, text, luminance, or the like, may be preceded. Moreover, a terminal apparatus may grasp meaning of a text and perform image processing. Further details of image reconstitution will be explained later.

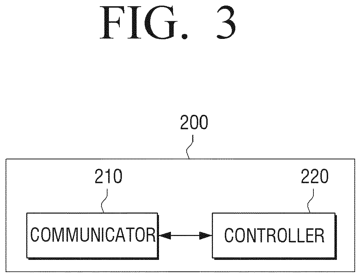

FIG. 3 is a block diagram of a server according to an exemplary embodiment. Referring to FIG. 3, the server 200 includes the communicator 210 and the controller 220.

The communicator 210 receives user information from the terminal apparatus 100. User information may be user information of the terminal apparatus 100 which transmits information and user information related to an event which occurs at the terminal apparatus 100.

The controller 220 searches a content based on the received user information. As an exemplary embodiment, the controller 220 may search a content related to received user information.

As another exemplary embodiment, the controller 220 may extract a curated content based on a level of interest of a user from among the searched contents. The level of interest of a user may be determined based on a certain standard. The certain standard may be set as user-preference of other users on a content, content uploading date, whether an image of a user of the terminal apparatus 100 is included, a selection category of a user of the terminal apparatus 100, connectedness with a recently-uploaded content of a user of the terminal apparatus 100, etc. As non-limiting examples, user-preference of other users may be determined by the number of clicks associated with a content, the number of views, the number of downloads, the number of recommendations, or the like. The certain standard to extract a curated content may be set based on a plurality of numbers, and in this case, priority may be set for setting the standard.

For example, if the number of recommendations of other users and uploading date are the standards, priority can be set on the number of recommendations of other users. In this case, content may be listed in an order of greater recommendations by other users, but for the content having the same number of recommendations, they may be listed in an order of uploading date, and a curated content may be determined. As another example, the terminal apparatus 100 may assign the number of recommendations of other users and uploading date with a certain value, and add up the assigned values of each content. Then, the contents may be listed in an order of greater assigned values, and a curated content may be determined. Alternatively, the certain values of each could be multiplied together, weighted, or input into some other function to derive the assigned value of each content.

The server 200, according to an exemplary embodiment, transmits a curated content related to a user or an extracted curated content to the terminal apparatus 100.

Meanwhile, a method for connecting the terminal apparatus 100 and the server 200, and connection timing thereof are shown below.

For example, when phone call is received from a caller, a curated content related to information on a caller is received from the server 200, and in this case, the controller 130, as to a caller already registered in a telephone list or an application, may receive a curated content from a server in regular timing, even when a phone call is not received. Herein, the curated content is a content extracted based on user information, and when this information is transmitted to the terminal apparatus 100 from the server 200, may be displayed mainly as a link information or URL, etc.

Accordingly, the controller 130, upon receiving a phone call, may provide information on a caller, or link information or URL on social media related to the caller; the controller 130 may display link information or URL, etc. on a screen; or automatically display a new window corresponding to the link information or URL on a screen.

Meanwhile, a log-in may be required to access a link or URL, and in order to solve inconvenience that log-in should be implemented every time, the controller 130 enables log-in on the corresponding link information or URL to be implemented in advance, and be continued in the case where a call is received from a caller.

Meanwhile, the controller 130, in accordance with user setting, may set a media for sharing in response to a preset event, and designate link information or URL thereof. For example, in response to an event such as a birthday occurring, an application set based on registered date, time, a designating person, or a designated place, or link information and URL corresponding to the application may be automatically displayed.

In addition, the controller 130, even when there is no user setting, in response to a preset event, may display link information or URL of a content, based on the number of clicks of the content, the number of views, the number of downloads, the number of recommendations, content uploading date, media corresponding to the event, media corresponding to a person, media corresponding to a place, media corresponding to friends registered in social application, media corresponding to a certain keyword, etc.

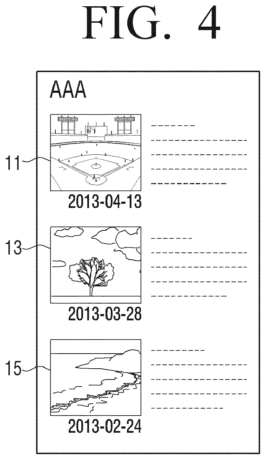

FIG. 4 is a view illustrating a method for extracting a curated content by using content upload date according to an exemplary embodiment.

As described above, in response to a preset event at the terminal apparatus 100, the terminal apparatus 100 transmits user information related to the happened event to the server 200. The terminal apparatus 100 counts the number of server connections, connection duration, or the like. The terminal apparatus 100 stores a server which is frequently connected based on counting result, according to a preset standard. The terminal apparatus 100 may transmit user information to a server frequently connected to receive a curated content.

Referring to FIG. 4, a content uploaded to a server by AAA is illustrated. A first content 11 is a content uploaded on April 13, 2013, a second content 13 is a content uploaded on March 28, 2013, and a third content 15 is a content uploaded on February 24, 2013. As described above, a curated content may be extracted in accordance with the order of uploading a content. Accordingly, when extracting one content, the first content 11 is extracted as a curated content. When extracting two contents, the first and second contents 11, 13 are extracted as a curated content. How many contents will be extracted as a curated content may be determined in accordance with a type of a template displayed at the terminal apparatus 100. Alternatively, the number of curated contents to be extracted may be preset.

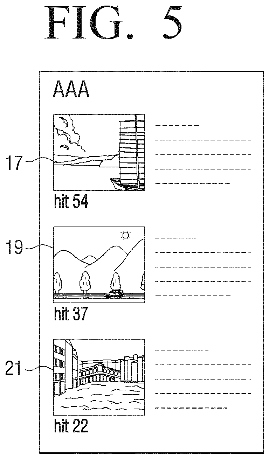

FIG. 5 is a view illustrating a method for extracting a curated content by using user-preference on a content according to an exemplary embodiment.

Referring to FIG. 5, the number of contents and hit records uploaded by AAA to a server are illustrated. The first content 17 is a content having 54 hit records, the second content 19 is a content having 37 hit records, and the third content 21 is a content having 22 hits. Therefore, when extracting one content, the first content 17 is extracted as a curated content. When extracting three contents, the first, the second, and the third contents 17, 19, 21 are extracted. The hit records illustrated in FIG. 5 mean user-preference. That is, it may be the number of recommendations of the corresponding contents by other users, or the number of views of the corresponding contents.

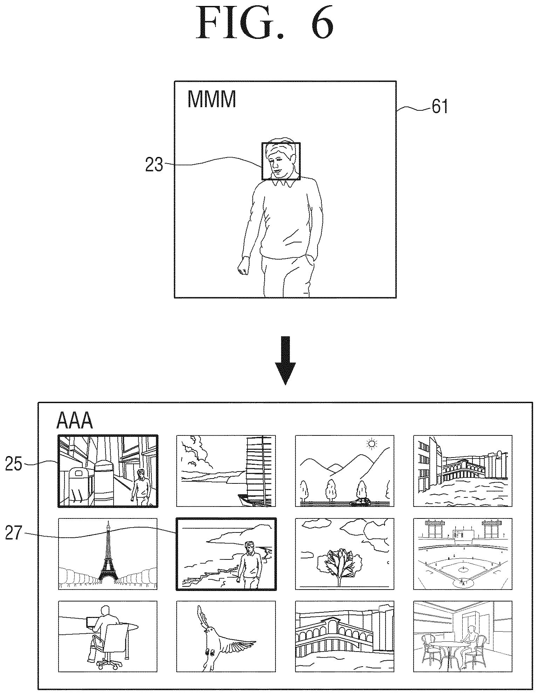

FIG. 6 is a view illustrating a method for extracting a curated content by using an image of a user of a terminal apparatus according to an exemplary embodiment.

According to FIG. 6, an image 61 of MMM who is a user of a terminal apparatus is illustrated. A terminal apparatus extracts the face image 23 from the image 61 of MMM. The extracted image may be stored in a terminal apparatus. As described above, a curated content may be extracted from a terminal apparatus or a server.

When a curated content is extracted from a terminal apparatus, the terminal apparatus transmits user information related to the happened event to a server and receives a content related to a user. That is, when an event related to AAA occurs at a terminal apparatus, the terminal apparatus transmits AAA information to a server, and receives a content related to AAA from a server. The terminal apparatus searches for, from among the received contents, a content including an image matched to the extracted face image 23. In other words, the first content 25 and the second content 27 including the face image 23 of MMM are searched from the received contents. The searched first and second contents are extracted as a curated content.

When a curated content is extracted from a server, a terminal apparatus transmits to a server user information related to the happened event and information on user of a terminal apparatus, and receives a curated content extracted from a server. That is, when an event related to AAA occurs at a terminal apparatus, the terminal apparatus transmits AAA information and the face image 23 of MMM to a server. The server receives information on AAA and the face image 23 of MMM, and searches a content including the face image 23 of MMM from among the contents related to AAA. Accordingly, a curated content is the first and the second contents 25, 27, and a server transmits a curated content to a terminal apparatus.

FIGS. 4-6 illustrate a method for extracting a curated content by using various methods. A curated content may be extracted according to one standard, but also according to two or more standard. For example, standard for extracting curated may be set as content uploading date and user-preference on a content. When two or more standards are set, a content is listed with the first standard having higher priority. When a content having the same priority is listed based on the first standard, a curated content may be extracted by applying the second standard. Or, a certain value may be assigned to a content according to the first standard or the second standard, and the assigned values may be combined. According to size of the combined values, a curated content may be extracted. Alternatively, the certain values of each could be multiplied together, weighted, or input into some other function to derive the assigned value of each content.

A curated content extracted from a server is transmitted to a terminal apparatus. A curated content may be extracted from a terminal apparatus. The terminal apparatus displays the received curated content or extracted curated content.

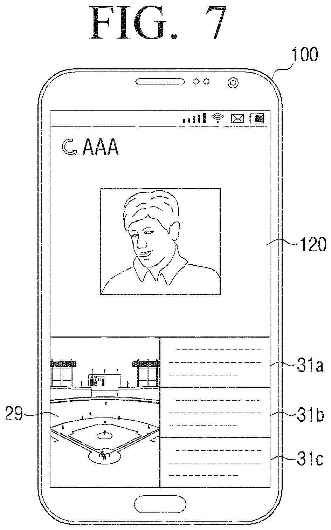

FIGS. 7-8 are views illustrating a curated content related to a phone call receiving event according to various exemplary embodiments.

Referring to FIG. 7, a call from AAA is received by the terminal apparatus 100. The terminal apparatus 100 which receives a call from AAA executes a phone call application. The terminal apparatus 100, on a part of the display 120, may display at least one of a name of AAA, phone number, and an image of AAA stored in a terminal apparatus. The terminal apparatus 100 receives a call from AAA and perceives that a phone call receiving event occurs. Accordingly, the terminal apparatus 100 transmits information of AAA to a server.

When a curated content is extracted from the terminal apparatus 100, a server transmits a content related to received information on AAA to the terminal apparatus 100. In a content related to information of AAA, a curated content to be displayed at the terminal apparatus 100 is included. The terminal apparatus 100 extracts a curated content from among contents related to received information of AAA. Various processes to extract a curated content was explained in FIGS. 4-6, and thus will be omitted.

The terminal apparatus 100 illustrated in FIG. 7 may display one main curated content 29 and a plurality of sub curated contents 31a, 31b, 31c. The terminal apparatus 100 may display one main curated content 29 as an image format, and display the plurality of sub curated contents 31a, 31b, 31c as a text format on a part of an area of the display 120. Or, the plurality of sub curated contents 31a, 31b, 31c may be indicated as an image type.

A curated content related to a phone call receiving event may be extracted in relation to a content of phone call.

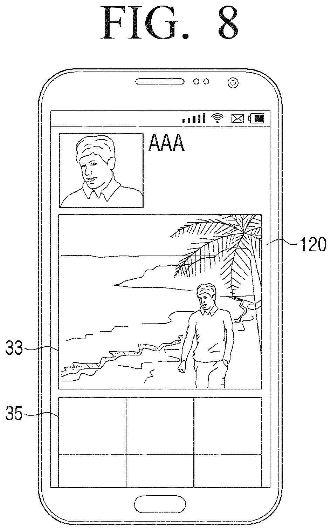

Referring to FIG. 8, a screen displayed on the terminal apparatus 100 while conducting a phone call is illustrated. A user of a terminal apparatus performs a phone call with a caller. The terminal apparatus 100 may extract a keyword from phone call while performing call. The terminal apparatus 100 transmits an extracted keyword to a server.

That is, MMM, a user of a terminal apparatus, makes a conversation regarding a recent trip with a caller AAA. The terminal apparatus 100 extracts a keyword related to 'trip' (e.g. via voice recognition), and transmits to a server an extracted keyword. The server searches a content related to the received keyword from among the contents related to AAA. The server may search a trip photo content 33, and extracts the photo content as a curated content. The server transmits the extracted photo content 33. The terminal apparatus 100 receives the trip photo content 33 transmitted by a server and displays on an area of the display 120.

The terminal apparatus 100 may display a control button 35 which is capable of controlling a telephone application on one area of the display 120. In some cases, the displayed control button 35 may include a button that can control a curated content. For example, the button that can control a curated content may be a button for increasing/decreasing, server access, reproduction of a moving image, next/previous images, etc.

The terminal apparatus 100 may extract a keyword from a phone call and transmit the keyword to a server. The keyword may be extracted in real time. The server may extract a curated content related to a transmitted keyword and transmit the curated content to the terminal apparatus 100. The terminal apparatus 100 may display the received curated content on a real time basis. Accordingly, the terminal apparatus 100, while performing a phone call, may change a curated content successively and display the curated content. As to the keyword extraction, the terminal apparatus 100 may extract a word which is repeated over preset times as a keyword. If the server, though receiving a keyword from the terminal apparatus 100, fails to extract a curated content related to a keyword, may transmit a signal to the terminal apparatus 100 that there is no adequate curated content.

As described above, a preset event may be an anniversary alarm event or a nearing preset time event. For example, an anniversary alarm event may be a birthday alarm event or a wedding anniversary alarm event. A nearing preset time event may be an event which is set like as 07:00AM and 10:00PM, happening when a preset time nears.

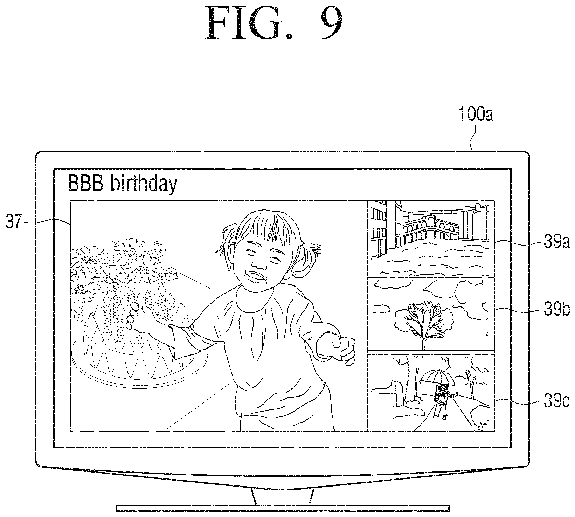

Referring to FIG. 9, in response to a birthday alarm event, a screen displayed on a terminal apparatus is illustrated. As described above, a terminal apparatus may be a cell phone, a smartphone, a PDA, a tablet, a TV, or the like. The terminal apparatus 100a executes, in response to a birthday of BBB nearing, a birthday alarm application. The terminal apparatus 100a transmits information related to BBB to a server. The server transmits to the terminal apparatus 100a a content related to BBB based on the received information on BBB. The terminal apparatus 100a extracts a curated content from among the received contents.

The terminal apparatus 100a may extract a main curated content 37 and a plurality of sub curated contents 39a, 39b, 39c. One main curated content 37 may be displayed on a larger area of a screen, and the plurality of sub curated contents 39a, 39b, 39c may be displayed on a part of an area of the display of the terminal apparatus 100a. Additionally, the terminal apparatus 100a may display a control menu which may input a control command. For example, a control menu may be a call menu with the other party, a server connection menu, a moving image reproduction menu, an entire image display menu, or the like.

The terminal apparatus 100a may display a curated content by another method.

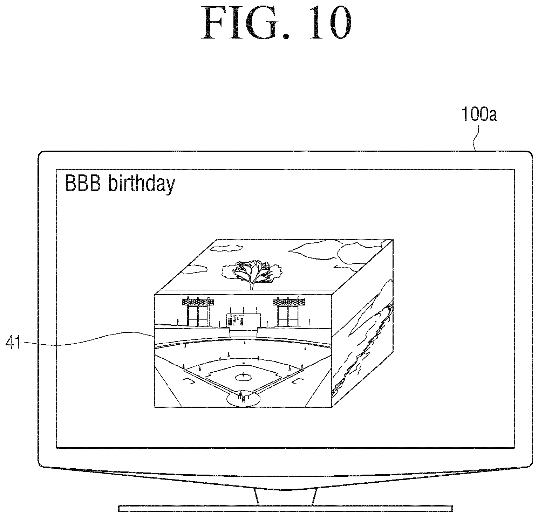

Referring to FIG. 10, a curated content 41 in 3D cube format is illustrated. The 3D cube format displays a curated content in a multi-dimensional way. A user may control the 3D format curated content 41 by using a touch gesture which touches a screen, a space gesture which inputs a motion through a camera, or the like. That is, a user may rotate and unfold the 3D format curated content 41. In addition, one curated content may be selected, and the terminal apparatus 100a may display the selected curated content on an entire screen.

It has been explained that a curated content is extracted by the terminal apparatus, but a curated content may be extracted by a server and transmitted to the terminal apparatus.

In addition, though not illustrated, a preset event may be a nearing preset time event. In this case, a curated content may be extracted from a category selected by a user or a category frequently connected by a user. For example, a category selected by a user or a category frequently connected by a user may be weather, baseball, and an economics category. The terminal apparatus, when a preset time nears, may request a curated content to a server, and receive data such as weather information, baseball game result, economic news, etc. as a curated content. In this case, a server may be an information providing server. The terminal apparatus receives and displays a curated content.

When the terminal apparatus displays a curated content, a received content may be displayed as it is, or resized content may be displayed. Or, the terminal apparatus may additionally reconstitute and display an image.

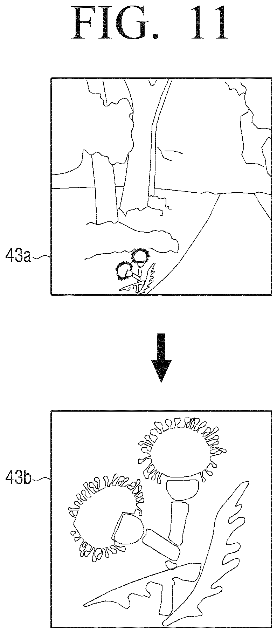

FIG. 11 is a view illustrating reconstitution of an image according to an exemplary This embodiment is not covered by the scope of the independent claims.

In FIG. 11, the received original image 43a is illustrated. The image 43a is an image of a flower, including backgrounds of road and street trees. If the size of image needs to be reduced in order to be displayed at the terminal apparatus, the size of the flower included in the original image 43a may be reduced to the extent that it is no longer perceivable.

Accordingly, the terminal apparatus may analyze the received original image 43a and perform retargeting. The retargeting means to decide a core subject of an image and reconstitute the image centering on the core subject. That is, the terminal apparatus may decide flower of the original image 43a is the core subject and generate a retargeting image 43b. The terminal apparatus may display the retargeting image 43b as a curated content.

Reconstitution of an image may include cropping, image enhancement, saturation compensation, etc. Cropping means cutting a certain area of an image or cutting a certain area of an image and reconstituting a remaining area of the image. Image enhancement means making an image clearer. Saturation compensation means, when there is a certain area of an image whose luminance is over a describable luminance, adjusting luminance of an entire image. The terminal apparatus may perform a plurality of image processing processes and display the reconstituted image as a curated content.

In addition, the perception technology on a curated content may be preceded. A curated content includes at least one of a text and an image. The perception technology may perceive a text included in a curated content and grasp meaning of the text. Also, the perception technology may perceive brightness, color, luminance, object, correlation, or face of an included image. Perception of an object means that whether or not an object of an image is a material, a person, or an animal. In case of perceiving face of a person, by using a perceived face image, an image in which the same person is included may be extracted from among other images. Moreover, face perception technology may perceive facial expression. For example, perception of correlation may include that a photographing subject of an image is whom or what, and that frequency of a photographing subject of each content which frequently shows up is grasped. In addition, the correlation perception technology, by using information obtained from other user information or other contents, may include determining which relation the photographing subject has regarding a user. For example, in case of a family photo, a photographing subject on a photo may be grasped as father or mother, etc.

The terminal apparatus, by using the perception technology, may perform perception process on a text or an image included in a curated content and reconstitute a curated content. An image includes both a dynamic image (ex, a moving image) and a still image (ex, a still cut). The terminal apparatus may perform image processing after performing perceiving process. Until now, the process of extracting a curated content and displaying the extracted curated content by the terminal apparatus has been explained.

Meanwhile, as described above, by perceiving brightness, color, luminance of an image included in a curated content and adding the interaction effect thereof, the interaction effect may be changed according to a user manipulation. This will be explained in higher detail.

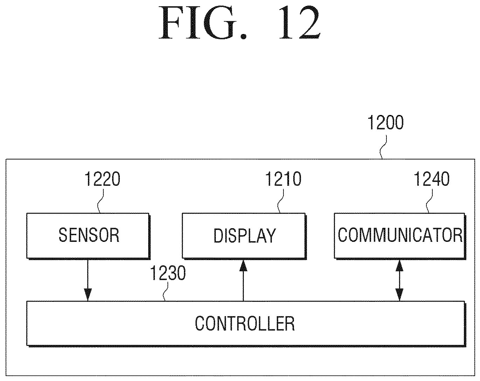

FIG. 12 is a block diagram illustrating a configuration of the terminal apparatus according to an exemplary embodiment.

Referring to FIG. 12, the terminal apparatus 1200 may include a display 1210, a sensor 1220, a controller 1230, and a communicator 1240.

The display 1210 may display a screen of a content. To be specific, the display 1210 may display a still image, a moving image, a text, or the like.

The sensor 1220 may sense a user manipulation. For example, the sensor 1220 may include a touch sensor, an acceleration sensor (Gyro sensor), pressure sensor, GPS, proximity sensor, a gesture sensor, terrestrial magnetism sensor, or the like.

In addition, the sensor 1220 may detect a user manipulation according to type of a sensor. For example, the touch sensor may detect a manipulation to touch a touch screen by a user, the acceleration sensor may detect a user manipulation to tilt or rotate the terminal apparatus 1200, and the pressure sensor may detect a user manipulation to blow wind to the terminal apparatus 1200.

Moreover, the GPS may detect a movement of the terminal apparatus 1200, the proximity sensor may detect location when an object approaches, for example, switching operation may be executed when a user's hand or a certain object comes to a certain location. The gesture sensor may detect a user gesture, the geomagnetic sensor may detect terrestrial magnetism and manipulation according to magnetic field or flow of electric current. The acceleration sensor may detect a user manipulation, such as a shake.

The controller 1230 may extract at least one object within a screen. To be specific, the controller 1230, in order to determine whether or not there is any object which can add the interaction effect, may find out a part to which motion, emotion, or extend-view can be added.

Herein, the object may include at least one of a material, face, or text displayed on a screen. That is, a material, face, or text to which the interaction effect may be added can be extracted as an object.

Meanwhile, in order to determine whether or not there is any object to which the controller 1230 may add the interaction effect, the perception technologies such as individual perception of an object, person, animal, perception of correlation, perception of an object or face, perception of facial expression, perception of text, or perception of brightness may be performed.

These perception technologies are different from detection technologies. In other words, to detect an object is to detect whether or not there is an object to find out within an image. For example, whether or not face is included within an image or at which location the face is located is detected.

Compared to this, perception of an object is to compare the features of an object found out within an image, that is a detected image, with the features of other objects, and find out what the object found out from the image is. For example, the perception may indicate whose face is found in the image . Therefore, in order to perceive an object, a GT (Ground Truth) database may be required.

Accordingly, the process to perceive a moving object is as shown below.

First of all, by comparing the previous frame and the present frame within an image, movement of a pixel may be forecast and compared, and accordingly, movements of an object may be detected. In addition, when there are a plurality of moving objects within an image, moving objects which are subject to perception may be selected in consideration of quantity of movements or location/angle of moving subjects.

In addition, by comparing the selected moving object with a database, they can be perceived as a certain object.

Accordingly, the controller 1230 may extract at least one object within a screen.

In addition, the controller 1230 may generate the interaction effect where the display state of an object changes according to a user manipulation. That is, a content may be analyzed based on the aforementioned perception technology. For example, meaning of text along with an image or a moving image may be grasped, and repetitive rhythm in audio data may be analyzed and extracted.

Moreover, the controller 1230 may find out various sensors included by the sensor 1220 at the terminal apparatus 1200 which reproduces a content. In other words, the controller may generate the interaction effect which may be utilized based on the extracted object and the found out various sensors.

For example, the controller 1230 may analyze a scene in which an umbrella is blown with wind, or fog flows, and extract an object corresponding to the scene. The controller 1230 may determine a sensor 1220 which may correspond to the scene in which an umbrella is blown with wind or fog flows. If, the pressure sensor is determined, the controller 1230, in response to the pressure sensor sensing a pressure, may generate the interaction effect that an umbrella is blown with wind or fog flows. The user may cause the pressure by blowing on the terminal apparatus 1200.

In addition, the controller 1230 may add the interaction effect to a content and process the effect. According to the afore-mentioned description, a certain content determined in accordance with degree of interest of a user which is determined based on a certain standard is called a curated content. Herein, the content to which the interaction effect is added and processed accordingly may be an example of the aforementioned curated content.

Meanwhile, the controller 1230 may generate metadata to indicate such interaction effect, add the metadata to a content, and process the content accordingly. That is, the controller 1230 may generate information on the interaction effect as metadata, add the generated metadata to a content, and process the content.

In addition, the controller 1230 may generate various interaction effects, for example, a content or luminance of an object may be adjusted in accordance with a user manipulation. To adjust a content in accordance with a user manipulation means that the reproduction direction of a content or details of the content itself are changed by user manipulation. For example, the controller 1230, when a user rubs one object included in a screen of a content which is being reproduced with the hand, may generate the interaction effect such as moving the object only or enlarging the object.

Or, when a user rubs the sun included in a content where the sun lights up seashore by the hand, the controller 1230 may generate the interaction effect that brightness of the sun increases further in accordance with the user manipulation of rubbing by the hand.

When a user takes a motion of touching or flicking a balloon included in a content where a screen, in which a balloon floats in the air, is reproduced, the controller 1230 may generate the interaction effect of bursting the balloon in accordance with the user manipulation of touching or flicking the balloon.

Meanwhile, the controller 1230 may add sound effect to a content in accordance with user manipulation. For example, if the piano is included in a screen where a content is reproduced, when a user touches the piano, the controller 1230 may generate the interaction effect of producing music in accordance with the user manipulation of touching the piano.

In addition, the controller 1230 may store information on an indicator which indicates an object to which the interaction effect is added in a metadata. That is, the controller 1230 may display an indicator which displays a part showing the interaction effect to a user on a screen where a content is reproduced, and such information on the indicator may be stored in the metadata.

Meanwhile, the controller 1230, when a user does not input a user manipulation within a certain period of time regarding a content to which the interaction effect is added and processed accordingly, the content may automatically reproduce the content itself without the interaction effect, or may reproduce a preset interaction effect. The certain period of time may be set by a user, and the effect which is displayed when a user manipulation is not input within the certain period of time may be set by a user. Alternatively, the period of time and predetermined effect may be set in the metadata.

The communicator 1240 may transmit a processed content to an external apparatus. Specifically, the controller 1230 may add the interaction effect to be changed in accordance with the user interaction to a content and process the content, and transmit the content to an external apparatus through the communicator 1240.

Herein, an external apparatus may be a server, or another terminal apparatus. When a server is an external apparatus, the communicator 1240 may upload the processed content to a Web bulletin board, SNS, or the like. In addition, when another terminal apparatus is an external apparatus, the communicator 1240 may transmit the processed content to the other terminal apparatus.

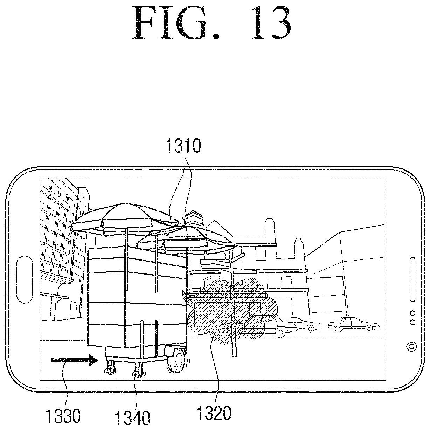

FIG. 13 is a view illustrating a screen where a content added with the interaction effect is displayed according to an exemplary embodiment. This embodiment is not covered by the scope of the independent claims.

According to FIG. 13, a screen where a stall 1340 stands on a road is displayed. Herein, the controller 1230 may forecast movements of a pixel by comparing the previous frame and the present frame within an image, and accordingly, extract the stall 1340 as one object. Moreover, the controller 1230, may generate the interaction effect that, when a user pushes the stall 1340 as an extracted object on a touch screen to one side 1330, the stall 1340 moves on a screen.

In addition, the controller 1230 may forecast the movements of a pixel by comparing the previous frame with the present frame within an image, and accordingly extract the umbrella 1310 attached to the stall 1340 as one object. Moreover, the controller 1230, in response to the pressure sensor sensing a pressure, may generate the interaction effect that the umbrella 1310 flutters and moves on a screen. The pressure sensor may be activated by a user blowing on the terminal apparatus 1200.

The controller 1230, by comparing the previous frame and the present frame within an image, may forecast of the movements of a pixel, and accordingly, generate the fog 1320 from the stall 1340 as one object. Moreover, the controller 1230, based on the acceleration sensor detecting a tilt of the terminal apparatus, may generate the interaction effect that the fog 1320 flows along the tilted direction.

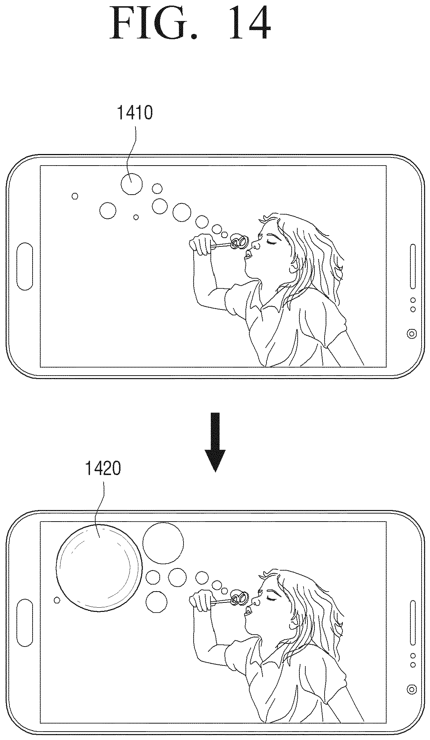

FIG. 14 is a view illustrating a screen which displays a content added with the interaction effect according to still another exemplary embodiment. 2. This embodiment is not covered by the scope of the independent claims.

In FIG. 14, a content in which a boy makes a bubble 1410 is being reproduced. Herein, the controller 1230 may forecast the movements of a pixel by comparing the previous frame with the present frame within an image, and accordingly, extract the soap bubble, which is getting bigger, as one object. Moreover, the controller 1230, based on the pressure sensor detecting a pressure, may generate the interaction effect that a bigger soap bubble 1420 appears on a screen. The pressure sensor may be activated by a user blowing on the terminal apparatus 1200.

In addition, the controller 1230, as described above, may add the generated interaction effect to a content, process the content, and transmit the processed content to a server or the other terminal apparatus.

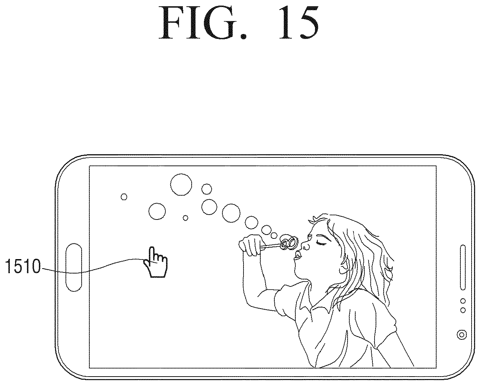

FIG. 15 is a view illustrating an indicator which displays an object added with an interaction effect according to an exemplary embodiment. 2. This embodiment is not covered by the scope of the independent claims.

According to FIG. 15, an icon 1510 in a shape of the hand is displayed, which indicates that the interaction effect described in FIG. 4 is added to a content. That is, a user, when confirming that the icon 1510 in a shape of the hand is displayed nearby the soap bubble, may notice that a certain effect may be generated regarding the soap bubble through the manipulation using the hand.

In FIG. 15, the icon 1510 in a shape of the hand is displayed, but another shape icon also may be displayed instead of, or in addition to the hand icon. Different icons may be displayed based on the type of interaction effect. Also, in one single screen, a plurality of icons indicating that a plurality of interactions are added may be displayed.

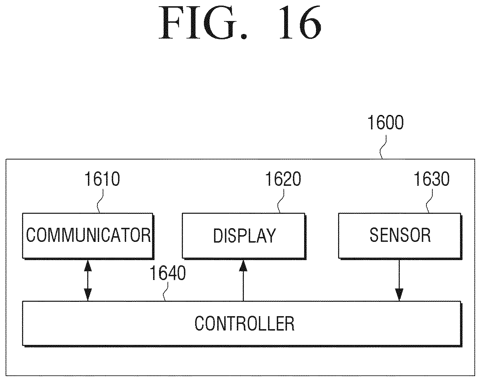

FIG. 16 is a block diagram illustrating the configuration of a terminal apparatus according to an exemplary embodiment.

According to FIG. 16, the terminal apparatus 1600 may include a communicator 1610, a display 1620, a sensor 1630, and a controller 1640.

The communicator 1610 may receive a content including an object added with a first interaction effect. That is, the communicator 1610 may receive a content which is added with a first interaction effect provided by another terminal apparatus and processed accordingly.

In addition, the display 1620 may display a content. The display 1620 may display a content including an object added with the first interaction effect.

Specifically, the display 1620, while displaying a screen corresponding to the content itself, when a user interaction corresponding to the first interaction effect is detected, may display the first interaction effect.

For example, as described in FIG. 14, the display 1620 may reproduce a scene of a boy making a bubble, where the bubble is an object added with a first interaction effect. Also, the display 1620, when a user blows on the terminal apparatus 1600, may reproduce a scene that the bubble corresponding to the first interaction effect gets bigger. In addition, as described above, the display 1620, if a user manipulation is not detected for a certain period of time, may reproduce a scene which corresponds to the content itself, or reproduce a scene corresponding to the first interaction effect.

The sensor 1630 may detect a user manipulation. The type of the sensor has been described earlier, and thus further descriptions are omitted.

The controller 1640 may generate a second interaction effect which changes a display state of an object according to a user manipulation, add the second interaction effect to a content, and reprocess the content.

Specifically, the controller 1640 may reprocess a content, by generating and adding a second interaction effect which changes a display state of an object according to a user manipulation to the content added with the first interaction effect received through the communicator 1610. Referring back to FIG. 13, it may be a process of generating a content including a plurality of the interaction effects. That is, when a controller of the first terminal apparatus, inputs a touch of pushing the stall 1340 by the hand, the first interaction effect in which the stall 1340 moves is generated and stored as metadata, and the generated metadata is added to a content and processed, and then transmitted to the second terminal apparatus. Then, a controller of the second terminal apparatus may reproduce a content added with the received metadata, and when a touch of pushing the stall 1340 is input, the first interaction effect of moving the stall 1340 may be displayed.

In addition, a controller of the second terminal apparatus, from among a plurality of objects included in the received content, may detect the umbrella 1310 as a moving object. When a touch input or pressure is detected, the second interaction effect that the umbrella 1310 flutters may be generated and added to the received content.

Accordingly, the second terminal apparatus, by adding another interaction effect to the content added with the interaction effect received by the first terminal apparatus, may reprocess a content.

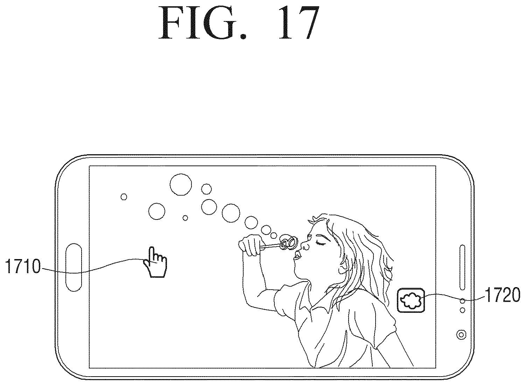

FIG. 17 is a view illustrating a screen which displays a content added with another interaction effect according to an exemplary embodiment.

According to FIG. 17, in a screen where a content is reproduced, an indicator 1710 in the shape of the hand which indicates that the first interaction effect is added is displayed, and an indicator 1720 in the shape of breath which indicates that the second interaction effect is added is displayed.

In other words, the indicator 1710 in the shape of the hand which is displayed near the bubble indicates that the first interaction effect on the bubble is added to a content, and the first interaction effect is generated and added by the first terminal apparatus. Accordingly, the second terminal apparatus receives a content where the indicator 1710 in the shape of the hand which indicates that the first interaction effect is added is displayed.

In addition, a controller of the second terminal apparatus may detect hair of a boy as one object, and, based on a pressure sensor detecting a pressure, may generate the second interaction effect to move the hair of the boy. The pressure sensor may be activated by blowing on the terminal apparatus. Moreover, a controller of the second terminal apparatus may reprocess a content by adding the second interaction effect to the received content, and display the indicator 1720 in the shape of breath icon which indicates that the second interaction effect is added.

Meanwhile, in the aforementioned example, it has been described that the first interaction effect and the second interaction effect are generated for the objects different from each other, but they may be generated for the same object by different user manipulations.

That is, the controller 1640 may generate different interaction effects based on different sensors which detect different user manipulations for the same object.

For example, for a content with a first interactive effect of displaying movements of candlelight, in response to a user shaking a device, the controller 1640 may add the second interaction effect displaying movements of candlelight in response to a user blowing on the device.

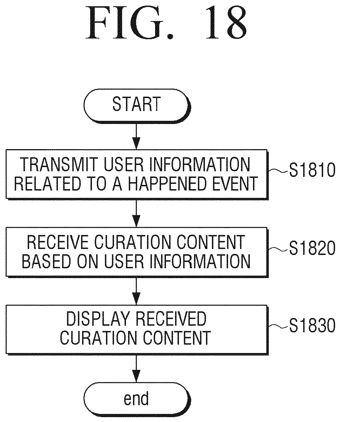

FIG. 18 is a flow chart illustrating a method for displaying a content of a terminal apparatus according to an exemplary embodiment. Referring to FIG. 18, the terminal apparatus transmit user information related to a happened event to a server (S1810). The happened event may be a phone call receiving event, an anniversary alarm event, a nearing present time event, etc. The terminal apparatus, when an event occurs, executes an application related to the happened event. For example, in the case of a phone call receiving event, a telephone application may be executed. In the case of a phone call receiving event, user information may be information on a caller.

The terminal apparatus receives a curated content based on user information (S1820). When a server extracts a curated content, the terminal apparatus receives the extracted curated content. When the terminal apparatus extracts a curated content, the terminal apparatus receives a content which is related to user information and includes a curated content.

The terminal apparatus displays a received curated content (S1830). The terminal apparatus may reconstitute and display an image included in a curated content. Reconstitution of an image may include retargeting, crop, image enhancement, saturation compensation of an image, or the like.

Meanwhile, when a content is related to a text, a content may change according to a comment or reply of a user on SNS. That is, a server or a controller may reflect the user comments or replies to a content in a comprehensive manner.

For example, when a content is a text related to famous restaurants, a server or a controller may change, store, and transmit a text in consideration of a list of the recommended restaurants or user-preference according to user comments or replies on SNS. Hereinbelow, a method for displaying the terminal apparatus and a method for controlling a server which extracts a curated content are explained.

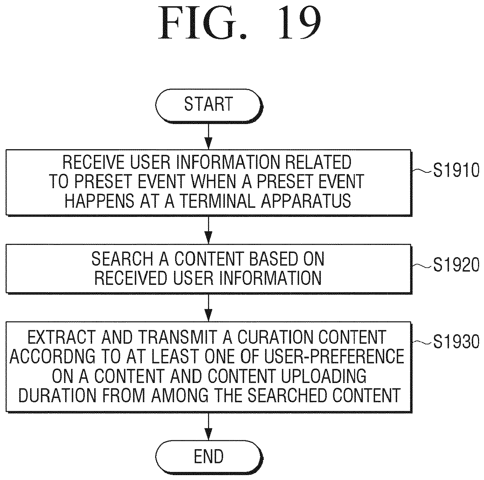

FIG. 19 is a flow chart illustrating a method for controlling a server according to an exemplary embodiment.

Referring to FIG. 19, in response to a preset event at the terminal apparatus, a server receives user information related to the preset event (S1910). The server searches content based on the received user information (S1920). The server may be an SNS server or a server providing information.

The server extracts curated content according to at least one of the user-preference or content uploading date, from among the searched contents, and transmits the content to the terminal apparatus (S1930). As non-limiting examples, the user-preference on a content may be determined based on the number of clicks of a content, number of downloads, number of views, number of recommendations, or the like. A curated content may be set based on whether an image of a user of the terminal apparatus is included, a category selected by a user of the terminal apparatus, relevance with recently-uploaded content by a user of the terminal apparatus, or the like. A curated content may include at least one of an image and a text. In addition, one or more curated content may be extracted.

In one or more exemplary embodiments, a content related to user information includes information and data related to user information.

A method for displaying a content of the terminal apparatus according to aforementioned various exemplary embodiments may be realized as a program and provided to the terminal apparatus.

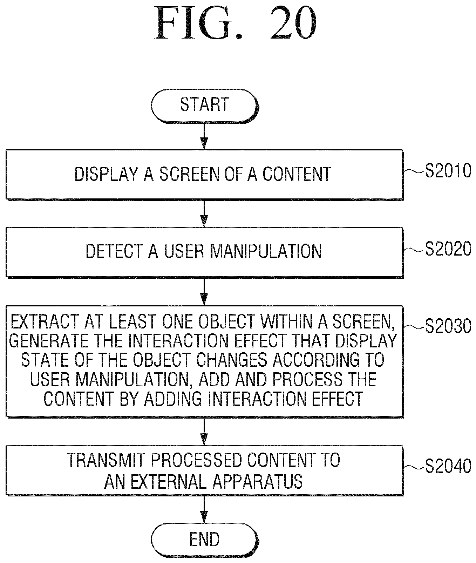

FIG. 20 is a flow chart illustrating a method for controlling a terminal apparatus according to an exemplary embodiment.

According to FIG. 20, the terminal apparatus may display a screen of a content (S2010).

In addition, the terminal apparatus may detect a user manipulation (S2020).

Also, the terminal apparatus may extract at least one object within a screen, generate an interaction effect where a display state of an object changes according to user manipulation, and add and process the interaction effect to a content (S2030).

Herein, the processing may include generating metadata to indicate the interaction effect, and adding the metadata to a content.

The processing may add sound effect to a content according to user manipulation.

In addition, the processing may store information on an indicator which indicates an object added with the interaction effect to metadata.

Also, an object may include at least one of a material, face, text displayed on a screen.

Meanwhile, the interaction effect may be an effect which adjusts luminance of a content or an object according to user manipulation.

Also, the terminal apparatus transmits the processed content to an external apparatus (S2040).

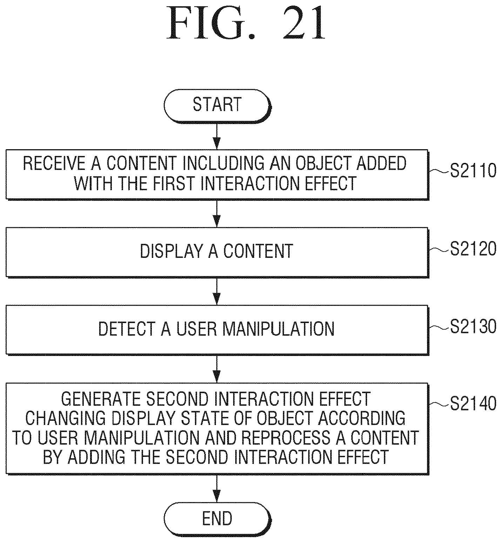

FIG. 21 is a flow chart illustrating a method for controlling a terminal apparatus according to an exemplary embodiment.

According to FIG. 21, the terminal apparatus may receive a content including an object added with the first interaction effect (S2110).

In addition, the terminal apparatus may display a content (S2120).

In addition, the terminal apparatus may detect user manipulation (S2130).

Meanwhile, the terminal apparatus may generate the second interaction effect which changes a display state of an object according to user manipulation, add the second interaction effect to a content, and reprocess the content (S2140).

As discussed above, embodiments of the invention can provide a terminal apparatus, comprising: a display; a communicator configured to perform communication with a server; and a controller configured to, in response to a preset event, receive from the server a curated content based on a user information related to the preset event and control the display to display the curated content. The term "curated content" refers to content potentially of interest to the user. The term "preset event" can refer to an event of a preset type. In some embodiments, the preset event can be related to an application which is operated separately from a server-only application. In some embodiments, the preset event is related to an application which is unassociated with the server. In some embodiments, the preset event occurs at the terminal apparatus.

Embodiments of the invention can provide server, comprising: a communicator configured to perform communication with a terminal apparatus; a controller configured to, in response to a preset event occurring at the terminal apparatus, receive user information related to the preset event, and search content based on the received user information; wherein the controller is further configured to control the extraction of a curated content in accordance with at least one from the set of user-preference and a content uploading date, from among the searched content, and control the communicator to transmit the content to the terminal apparatus.

Embodiments of the invention can provide a terminal apparatus, comprising: a display configured to display a screen of a content; a sensor configured to detect a user manipulation; a controller configured to extract at least one object from the content, generate an interaction effect in which a display state of the object is changed in accordance with the user manipulation, and process the content by adding the interaction effect to the content; and a communicator configured to transmit the processed content to an external apparatus.

Embodiments of the invention can provide a terminal apparatus, comprising: a communicator configured to receive a content including a first interaction effect; a display configured to display the content; a sensor configured to detect a user manipulation; and a controller configured to generate a second interaction effect which changes a display state of the object in accordance with the user manipulation, and reprocess content by adding the second interaction effect to the content.

Embodiments of the invention can provide a method for displaying a content of a terminal apparatus, the method comprising: in response to a preset event, transmitting a user information related to the preset event to a server; receiving from the server a curated content based on the user information; and displaying the received curated content; wherein the preset event is related to an application operated separately from a server-only application..

Embodiments of the invention can provide a method for controlling a server, the method comprising: in response to a preset event at a terminal apparatus, receiving user information related to the preset event; searching content based on the received user information; and extracting a curated content from among the searched content in accordance with at least one of a user-preference of the content and a content uploading date; and transmitting the curated content to the terminal apparatus.

Embodiments of the invention can provide a method for controlling a terminal apparatus, the method comprising: extracting at least one object from a screen of a content; generating an interaction effect in which a display state of the object is changed in accordance with a user manipulation; processing the content by adding the interaction effect to the content; and transmitting the processed content to an external apparatus. Embodiments of the invention can provide a method for controlling a terminal apparatus, the method comprising: receiving a content including a first interaction effect related to an object in the content; displaying the content; detecting a user manipulation; generating a second interaction effect in which a display state of the object is changed in accordance with the user manipulation; and reprocessing the content by adding the second interaction effect to the content.

A non-transitory computer readable medium where a program which executes, when a preset event occurs, transmitting user information related to a preset event to a server, receiving a curated content based on user information from a server, and displaying a received curated content ion content may be provided.

The non-transitory recordable medium refers to a medium which may store data semi-permanently rather than storing data for a short time such as a register, a c, and a memory and may be readable by an apparatus. Specifically, the above-mentioned various applications or programs may be stored in a non-temporal recordable medium such as CD, DVD, hard disk, Blu-ray disk, USB, memory card, and ROM and provided therein.

The foregoing embodiments and advantages are merely exemplary and are not to be construed as limiting. The present teaching can be readily applied to other types of apparatuses.

## Claims

1. A terminal apparatus (100, 1200, 1600) of a first user, comprising:
a display (120, 1210, 1620);
a communicator (110, 1240, 1610);
a sensor (1220); and
a controller (130, 1230, 1640) configured to:
based on the terminal apparatus performing a phone call with a second user which is a caller, extract a keyword from a content of the phone call;
control the communicator to transmit the extracted keyword and information of the second user to a server,
receive from the server a curated content (11, 13, 15, 17, 19, 21, 25, 27, 29, 31a, 31b, 31c, 33, 37, 39a, 39b, 39c, 41, 43b) relating to the second user and the keyword based on the keyword and the information of the second user, and
control the display to display the curated content,
wherein the controller is further configured to:
extract at least one object (1340, 1410, 1420) from the received curated content,
generate an interaction effect in which a display state of the object is changed in accordance with a user manipulation detected by the sensor,
process the curated content by adding the interaction effect to the content, and
control the communicator (1240) to transmit the processed content to an external apparatus.

2. The apparatus as claimed in claim 1, wherein the curated content is extracted in accordance with at least one from the set of user-preference on a content and a content uploading date,
and wherein the controller is configured to control to receive from the server a curated content related to the information on a caller and display the content.

3. The apparatus as claimed in any one of claims 1 and 2, wherein the controller is further configured to reconstitute the curated content,
wherein the curated content reconstitution comprises at least one perception process from among text perception, image luminance perception, perception of the object in an image, correlation perception, and face perception.

4. A system comprising a terminal apparatus according to any one of the preceding claims, and a server,
wherein the server (200) comprises:
a communicator (210) configured to perform communication with the terminal apparatus (100) of a first user;
a controller (220) configured to:
based on the phone call with a second user, which is a caller, occurring at the terminal apparatus, receive the keyword extracted from the content of the phone call and information of the second user, and search content based on the received keyword and the information of the second user;
wherein the controller is further configured to control the extraction of a curated content (11, 13, 15, 17, 19, 21, 25, 27, 29, 31a, 31b, 31c, 33, 37, 39a, 39b, 39c, 41, 43b) relating to the keyword and the second user in accordance with at least one from the set of user-preference and a content uploading date, from among the searched content, and control the communicator to transmit the curated content to the terminal apparatus,
wherein the controller is further configured to receive the processed content from the terminal apparatus (100).

5. The apparatus as claimed in any one of claims 1 to 3, wherein the controller is further configured to generate metadata to express the interaction effect, and to process the content by adding the metadata to the curated content,
wherein the object comprises at least one from the set of a material, face, and a text.

6. The apparatus as claimed in any one of claims 1 to 3 or 5, wherein the interaction effect is an effect which adjusts luminance of the curated content or the object in accordance with the user manipulation,
wherein the controller is further configured to add a sound effect to the curated content, wherein the sound effect is activated in accordance with the user manipulation.

7. The terminal apparatus (1600) as claimed in any one claims 1 to 3, wherein the received curated content includes a first interaction effect related to a first object in the curated content, and
wherein the controller (1640) is further configured to generate a second interaction effect which changes a display state of a second object in accordance with the user manipulation, and reprocess the curated content by adding the second interaction effect to the curated content.

8. A method for displaying a content of a terminal apparatus (100, 1200, 1600) of a first user, the method comprising:
based on the terminal apparatus performing a phone call with a second user which is a caller, extracting a keyword from a content of the phone call, transmitting the extracted keyword and information of the second user to a server (200);
receiving from the server a curated content relating to the keyword and the second user (11, 13, 15, 17, 19, 21, 25, 27, 29, 31a, 31b, 31c, 33, 37, 39a, 39b, 39c, 41, 43b) based on the keyword and the information of the second user; and
displaying the received curated content,
extracting at least one object (1340, 1410, 1420) from a screen of the curated content;
generating an interaction effect in which a display state of the object is changed in accordance with a user manipulation;
processing the curated content by adding the interaction effect to the curated content; and
transmitting the processed curated content to an external apparatus.

9. A method of operating a system comprising a terminal apparatus and a server, the method comprising displaying a content of the terminal apparatus as claimed in claim 8 further comprising, by the server:
based on the phone call with the second user being performed at the terminal apparatus (100) of the first user, receiving the keyword extracted from the content of the phone call and information of the second user;
searching content based on the received keyword and the information of the second user; and
extracting a curated content (11, 13, 15, 17, 19, 21, 25, 27, 29, 31a, 31b, 31c, 33, 37, 39a, 39b, 39c, 41, 43b) relating to the keyword and the second user from among the searched content in accordance with at least one of a user-preference of the content and a content uploading date; and
transmitting the curated content to the terminal apparatus,
receiving the processed content from the terminal apparatus (100).

10. The method for controlling a terminal apparatus (1600) according to claim 8, the method further comprising:
receiving a curated content including a first interaction effect related to a first object in the curated content;
detecting a user manipulation;
generating a second interaction effect in which a display state of a second object is changed in accordance with the user manipulation; and
reprocessing the curated content by adding the second interaction effect to the curated content.

## Patentansprüche

1. Endgerät (100, 1200, 1600) eines ersten Benutzers, umfassend:
eine Anzeige (120, 1210, 1620);
einen Kommunikator (110, 1240, 1610);
einen Sensor (1220); und
eine Steuerung (130, 1230, 1640), die konfiguriert ist, um:
basierend darauf, dass das Endgerät einen Telefonanruf mit einem zweiten Benutzer durchführt, der ein Anrufer ist, ein Schlüsselwort aus einem Inhalt des Telefonanrufs zu extrahieren;
den Kommunikator zu steuern, um das extrahierte Schlüsselwort und Informationen des zweiten Benutzers an einen Server zu übertragen,
vom Server einen kuratierten Inhalt (11, 13, 15, 17, 19, 21, 25, 27, 29, 31a, 31b, 31c, 33, 37, 39a, 39b, 39c, 41, 43b) in Bezug auf den zweiten Benutzer und das Schlüsselwort basierend auf dem Schlüsselwort und den Informationen des zweiten Benutzers zu empfangen, und
die Anzeige zu steuern, um den kuratierten Inhalt anzuzeigen,
wobei die Steuerung ferner konfiguriert ist, um:
mindestens ein Objekt (1340, 1410, 1420) aus dem empfangenen kuratierten Inhalt zu extrahieren,
einen Interaktionseffekt zu generieren, bei dem ein Anzeigezustand des Objekts gemäß einer durch den Sensor erfassten Benutzerbedienung geändert wird,
den kuratierten Inhalt zu verarbeiten, indem der Interaktionseffekt zu dem Inhalt hinzugefügt wird, und
den Kommunikator (1240) zu steuern, um den verarbeiteten Inhalt an ein externes Gerät zu übertragen.

2. Gerät nach Anspruch 1, wobei der kuratierte Inhalt gemäß mindestens einem aus dem Satz von Benutzerpräferenzen bezüglich eines Inhalts und einem Inhalts-Hochladedatum extrahiert wird,
und wobei die Steuerung konfiguriert ist, um so zu steuern, dass sie von dem Server einen kuratierten Inhalt empfängt, der sich auf die Informationen über einen Anrufer bezieht, und den Inhalt anzeigt.

3. Gerät nach einem der Ansprüche 1 und 2, wobei die Steuerung ferner konfiguriert ist, um den kuratierten Inhalt wiederherzustellen,
wobei die kuratierte Inhaltswiederherstellung mindestens einen Wahrnehmungsprozess aus Textwahrnehmung, Bildhelligkeitswahrnehmung, Wahrnehmung des Objekts in einem Bild, Korrelationswahrnehmung und Gesichtswahrnehmung umfasst.

4. System, umfassend ein Endgerät nach einem der vorhergehenden Ansprüche und einen Server,
wobei der Server (200) umfasst:
einen Kommunikator (210), der konfiguriert ist, um eine Kommunikation mit dem Endgerät (100) eines ersten Benutzers durchzuführen;
eine Steuerung (220), die konfiguriert ist, um:
basierend auf dem Telefonanruf mit einem zweiten Benutzer, der ein Anrufer ist, der an dem Endgerät stattfindet, das aus dem Inhalt des Telefonanrufs extrahierte Schlüsselwort und die Informationen des zweiten Benutzers zu empfangen und den Inhalt basierend auf dem empfangenen Schlüsselwort und den Informationen des zweiten Benutzers zu suchen;
wobei die Steuerung ferner konfiguriert ist, um die Extraktion eines kuratierten Inhalts (11, 13, 15, 17, 19, 21, 25, 27, 29, 31a, 31b, 31c, 33, 37, 39a, 39b, 39c, 41, 43b) in Bezug auf das Schlüsselwort und den zweiten Benutzer gemäß mindestens einem aus dem Satz von Benutzerpräferenzen und einem Inhalts-Hochladedatum aus dem gesuchten Inhalt zu steuern und den Kommunikator zu steuern, um den kuratierten Inhalt an das Endgerät zu übertragen,
wobei die Steuerung ferner konfiguriert ist, um den verarbeiteten Inhalt von dem Endgerät (100) zu empfangen.

5. Gerät nach einem der Ansprüche 1 bis 3, wobei die Steuerung ferner konfiguriert ist, um Metadaten zu generieren, um den Interaktionseffekt auszudrücken und um den Inhalt zu verarbeiten, indem die Metadaten zu dem kuratierten Inhalt hinzugefügt werden,
wobei das Objekt mindestens eines aus dem Satz eines Materials, eines Gesichts und eines Textes umfasst.

6. Gerät nach einem der Ansprüche 1 bis 3 oder 5, wobei der Interaktionseffekt ein Effekt ist, der die Helligkeit des kuratierten Inhalts oder des Objekts gemäß der Benutzerbedienung anpasst,
wobei die Steuerung ferner konfiguriert ist, um zu dem kuratierten Inhalt einen Soundeffekt hinzuzufügen, wobei der Soundeffekt gemäß der Benutzerbedienung aktiviert wird.

7. Endgerät (1600) nach einem der Ansprüche 1 bis 3, wobei der empfangene kuratierte Inhalt einen ersten Interaktionseffekt enthält, der sich auf ein erstes Objekt in dem kuratierten Inhalt bezieht, und
wobei die Steuerung (1640) ferner konfiguriert ist, um einen zweiten Interaktionseffekt zu generieren, der einen Anzeigezustand eines zweiten Objekts gemäß der Benutzerbedienung ändert, und den kuratierten Inhalt erneut zu verarbeiten, indem der zweite Interaktionseffekt zu dem kuratierten Inhalt hinzugefügt wird.

8. Verfahren zum Anzeigen eines Inhalts eines Endgeräts (100, 1200, 1600) eines ersten Benutzers, wobei das Verfahren umfasst:
basierend darauf, dass das Endgerät einen Telefonanruf mit einem zweiten Benutzer durchführt, der ein Anrufer ist,
Extrahieren eines Schlüsselworts aus einem Inhalt des Telefonanrufs, Übertragen des extrahierten Schlüsselworts und Informationen des zweiten Benutzers an einen Server (200);
Empfangen, vom Server, eines kuratierten Inhalts in Bezug auf das Schlüsselwort und den zweiten Benutzer (11, 13, 15, 17, 19, 21, 25, 27, 29, 31a, 31b, 31c, 33, 37, 39a, 39b, 39c, 41, 43b) basierend auf dem Schlüsselwort und den Informationen des zweiten Benutzers; und
Anzeigen des empfangenen kuratierten Inhalts,
Extrahieren mindestens eines Objekts (1340, 1410, 1420) von einem Bildschirm des kuratierten Inhalts;
Generieren eines Interaktionseffekts, bei dem ein Anzeigezustand des Objekts gemäß einer Benutzerbedienung geändert wird,
Verarbeiten des kuratierten Inhalts, indem der Interaktionseffekt zu dem kuratierten Inhalt hinzugefügt wird; und
Übertragen des verarbeiteten kuratierten Inhalts an ein externes Gerät.

9. Verfahren zum Betreiben eines Systems, das ein Endgerät und einen Server umfasst, wobei das Verfahren das Anzeigen eines Inhalts des Endgeräts nach Anspruch 8 umfasst, ferner umfassend, durch den Server:
basierend auf dem Telefonanruf mit dem zweiten Benutzer, der an dem Endgerät (100) des ersten Benutzers durchgeführt wird, Empfangen des aus dem Inhalt des Telefonanrufs extrahierten Schlüsselworts und von Informationen des zweiten Benutzers;
Suchen von Inhalt basierend auf dem empfangenen Schlüsselwort und den Informationen des zweiten Benutzers; und
Extrahieren eines kuratierten Inhalts (11, 13, 15, 17, 19, 21, 25, 27, 29, 31a, 31b, 31c, 33, 37, 39a, 39b, 39c, 41, 43b) in Bezug auf das Schlüsselwort und den zweitem Benutzer aus dem gesuchten Inhalt gemäß mindestens einem von einer Benutzerpräferenz des Inhalts und einem Inhalts-Hochladedatum; und
Übertragen des kuratierten Inhalts an das Endgerät,
Empfangen des verarbeiteten Inhalts von dem Endgerät (100).

10. Verfahren zum Steuern eines Endgeräts (1600) nach Anspruch 8, wobei das Verfahren ferner umfasst:
Empfangen eines kuratierten Inhalts, der einen ersten Interaktionseffekt enthält, der sich auf ein erstes Objekt in dem kuratierten Inhalt bezieht;
Erfassen einer Benutzerbedienung;
Generieren eines zweiten Interaktionseffekts, bei dem ein Anzeigezustand eines zweiten Objekts gemäß der Benutzerbedienung geändert wird; und
erneutes Verarbeiten des kuratierten Inhalts, indem der zweite Interaktionseffekt zu dem kuratierten Inhalt hinzugefügt wird.

## Revendications

1. Appareil terminal (100, 1200, 1600) d'un premier utilisateur, comprenant :
un écran (120, 1210, 1620) ;
un communicateur (110, 1240, 1610) ;
un capteur (1220) ; et
un dispositif de commande (130, 1230, 1640) configuré pour :
sur la base de l'appareil terminal qui effectue un appel téléphonique avec un second utilisateur qui est un appelant, extraire un mot-clé d'un contenu de l'appel téléphonique ;
commander au communicateur de transmettre le mot-clé extrait et des informations du second utilisateur à un serveur,
recevoir du serveur un contenu organisé (11, 13, 15, 17, 19, 21, 25, 27, 29, 31a, 31b, 31c, 33, 37, 39a, 39b, 39c, 41, 43b) relatif au second utilisateur et le mot-clé sur la base du mot-clé et des informations du second utilisateur, et
commander l'écran pour afficher le contenu organisé,
ladite unité de commande étant en outre configurée pour :
extraire au moins un objet (1340, 1410, 1420) du contenu organisé reçu,
générer un effet d'interaction dans lequel un état d'affichage de l'objet est modifié conformément à une manipulation d'utilisateur détectée par le capteur,
traiter le contenu organisé en ajoutant l'effet d'interaction au contenu, et
commander au communicateur (1240) de transmettre le contenu traité à un appareil externe.

2. Appareil selon la revendication 1, ledit contenu organisé étant extrait conformément à au moins l'une parmi l'ensemble d'une préférence d'utilisateur sur un contenu et d'une date de téléchargement de contenu,
et ledit dispositif de commande étant configuré pour commander la réception du serveur d'un contenu organisé relatif aux informations sur un appelant et l'affichage du contenu.

3. Appareil selon l'une quelconque des revendications 1 et 2, ledit dispositif de commande étant en outre configuré pour reconstituer le contenu organisé,
ladite reconstitution de contenu organisé comprenant au moins un processus de perception parmi la perception de texte, la perception de luminance d'image, la perception de l'objet dans une image, la perception de corrélation et la perception de visage.

4. Système comprenant un appareil terminal selon l'une quelconque des revendications précédentes, et un serveur,
ledit serveur (200) comprenant :
un communicateur (210) configuré pour effectuer la communication avec l'appareil terminal (100) d'un premier utilisateur ;
un dispositif de commande (220) configuré pour :
sur la base de l'appel téléphonique avec un second utilisateur, qui est un appelant, qui se produit au niveau de l'appareil terminal, recevoir le mot-clé extrait du contenu de l'appel téléphonique et des informations du second utilisateur, et rechercher un contenu sur la base du mot-clé reçu et des informations du second utilisateur ;
ledit dispositif de commande étant en outre configuré pour commander l'extraction d'un contenu organisé (11, 13, 15, 17, 19, 21, 25, 27, 29, 31a, 31b, 31c, 33, 37, 39a, 39b, 39c, 41, 43b) relatif au mot-clé et au second utilisateur conformément à au moins l'une parmi l'ensemble d'une préférence d'utilisateur et d'une date de téléchargement de contenu, parmi le contenu recherché, et commander au communicateur de transmettre le contenu organisé à l'appareil terminal,
ledit dispositif de commande étant en outre configuré pour recevoir le contenu traité provenant de l'appareil terminal (100).

5. Appareil selon l'une quelconque des revendications 1 à 3, ledit dispositif de commande étant en outre configuré pour générer des métadonnées pour exprimer l'effet d'interaction, et pour traiter le contenu en ajoutant les métadonnées au contenu organisé,
ledit objet comprenant au moins l'un parmi l'ensemble d'un matériau, d'un visage et d'un texte.

6. Appareil selon l'une quelconque des revendications 1 à 3 ou 5, ledit effet d'interaction étant un effet qui ajuste la luminance du contenu organisé ou de l'objet conformément à la manipulation de l'utilisateur,
ledit dispositif de commande étant en outre configuré pour ajouter un effet sonore au contenu organisé, ledit effet sonore étant activé conformément à la manipulation de l'utilisateur.

7. Appareil terminal (1600) selon l'une quelconque des revendications 1 à 3, ledit contenu organisé reçu comprenant un premier effet d'interaction lié à un premier objet dans le contenu organisé, et
ledit dispositif de commande (1640) étant en outre configuré pour générer un second effet d'interaction qui modifie un état d'affichage d'un second objet conformément à la manipulation de l'utilisateur, et retraiter le contenu organisé en ajoutant le second effet d'interaction au contenu organisé.

8. Procédé permettant d'afficher un contenu d'un appareil terminal (100, 1200, 1600) d'un premier utilisateur, le procédé comprenant :
sur la base de l'appareil terminal qui effectue un appel téléphonique avec un second utilisateur qui est un appelant,
l'extraction d'un mot-clé d'un contenu de l'appel téléphonique, la transmission du mot-clé extrait et d'informations du second utilisateur à un serveur (200) ;
la réception en provenance du serveur d'un contenu organisé relatif au mot-clé et au second utilisateur (11, 13, 15, 17, 19, 21, 25, 27, 29, 31a, 31b, 31c, 33, 37, 39a, 39b, 39c, 41, 43b) sur la base du mot-clé et des informations du second utilisateur ; et
l'affichage du contenu organisé reçu,
l'extraction d'au moins un objet (1340, 1410, 1420) d'un écran du contenu organisé ;
la génération d'un effet d'interaction dans lequel un état d'affichage de l'objet est modifié conformément à une manipulation d'utilisateur ;
le traitement du contenu organisé en ajoutant l'effet d'interaction au contenu organisé ; et
la transmission du contenu organisé traité à un appareil externe.

9. Procédé d'exploitation d'un système comprenant un appareil terminal et un serveur, le procédé comprenant l'affichage d'un contenu de l'appareil terminal selon la revendication 8 qui comprend en outre, au moyen du serveur :
sur la base de l'appel téléphonique avec le second utilisateur effectué au niveau de l'appareil terminal (100) du premier utilisateur, la réception du mot-clé extrait du contenu de l'appel téléphonique et d'informations du second utilisateur ;
la recherche d'un contenu sur la base du mot-clé reçu et des informations du second utilisateur ; et
l'extraction d'un contenu organisé (11, 13, 15, 17, 19, 21, 25, 27, 29, 31a, 31b, 31c, 33, 37, 39a, 39b, 39c, 41, 43b) relatif au mot-clé et au second utilisateur parmi le contenu recherché conformément à au moins l'une d'une préférence d'utilisateur du contenu et d'une date de téléchargement de contenu ; et
la transmission du contenu organisé à l'appareil terminal,
la réception du contenu traité en provenance de l'appareil terminal (100).

10. Procédé de commande d'un appareil terminal (1600) selon la revendication 8, le procédé comprenant en outre :
la réception d'un contenu organisé comprenant un premier effet d'interaction lié à un premier objet dans le contenu organisé ;
la détection d'une manipulation d'utilisateur ;
la génération d'un second effet d'interaction dans lequel un état d'affichage d'un second objet est modifié conformément à la manipulation de l'utilisateur ; et
le retraitement du contenu organisé en ajoutant le second effet d'interaction au contenu organisé.
